# EUROPEAN PATENT SPECIFICATION

(11) **EP 1 013 019 B1**
(45) Date of publication and mention of the grant of the patent: **11.01.2006**
(21) Application number: 98937584.5
(22) Date of filing: 07.08.1998
(51) Int. Cl.: H04J 3/06, H04L 12/54, H04Q 11/06

(54) **METHOD FOR MODELLING AND REALISING CONNECTIONS IN AN SDH DIGITAL CROSS-CONNECT**
VERFAHREN ZUR MODELLIERUNG UND REALISIERUNG VON VERBINDUNGEN IN EINEM DIGITALEN SDH KREUZSCHIENENVERTEILER
TECHNIQUE DE MODELISATION ET DE REALISATION DE CONNEXIONS DANS UN EQUIPEMENT DE SOUS-REPARTITION NUMERIQUE HNS

(30) Priority: 08.08.1997 FI 973274
(43) Date of publication of application: 28.06.2000
(73) Proprietor: Nokia Corporation, 02150 Espoo (FI)
(72) Inventor: PELTOMÄKI, Arto, FIN-02730 Espoo (FI); LAUDER, Andrew, George, Cambridge CB13AJ (GB)
(74) Representative: Levlin, Jan Markus
(86) International application number: PCT/FI1998/000614
(87) International publication number: WO 1999/008410

(56) References cited:
- WO-A1-93/22859
- US-A- 5 815 490
- PATENT ABSTRACTS OF JAPAN; & JP 8130523 A (NEC CORP) 21 May 1996.
- PATENT ABSTRACTS OF JAPAN; & JP 5227117 A (FUJITSU LTD) 3 Sept. 1993.

## Description

The invention relates to SDH digital cross-connects, more specifically to their management systems. The invention is directed to an arrangement whereby e.g. 64-kbit/s signal connections can be defined in an SDH network element in a way that requires considerably less memory capacity than prior-art methods.

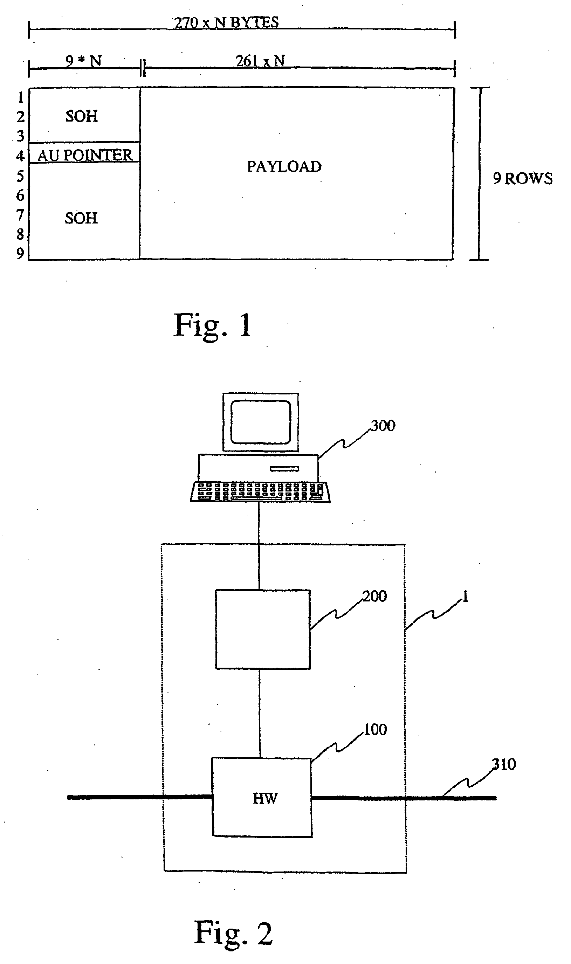

Telecommunication networks are switching over to synchronous digital hierarchy (SDH), specified e.g. in the CCITT Recommendations G.707, G.708 and G.709. The basic structural element in the SDH system is the synchronous transport module, STM. Fig. 1 shows the structure of an STM frame. The STM frame structure is used at several different data transmission speeds, or bit rates, so that we talk about STM-1, STM-4 or STM-16 frames, depending on the bit rate used, or generally about an STM-N frame, where N stands for a multiple of the basic speed. The STM-N frame comprises a payload and section overhead (SOH). Rows 1 to 3 and 5 to 9 in columns 1 to 9xN are reserved for the SOH bytes. Row 4 in columns 1 to 9xN is reserved for administrative unit (AU) pointers. The rest of the columns, or bytes, are reserved for the payload of the STM-N frame. Thus, there are 261 x 9 x N, or 2349 * N, payload bytes in one frame. The STM-N frame structure is repeated at 125-µs intervals, which gives the following bit rates:

| *SDH level* | *bit rate (kbit*/*s)* |
|---|---|
| STM-1 | 155,520 |
| STM-4 | 622,080 |
| STM-16 | 2,488,320 |

Payload bit rates are somewhat lower than these figures due to the section overhead.

The payload can be used in many ways; e.g. in an STM frame it is possible to transmit signals of various speeds by dividing the STM frame payload into sub-units of different sizes which have address and payload data of their own. Typically, the payload of a STM-1 frame consists of 63 VC-12 frames, each of which has a transmission capacity of 2048 kbit/s. The payload of each VC-12 frame consists typically of 30 or 31 64 kbit/s channels. Each of the 64-kbit/s channels is typically used to transmit a voice call. The location of every signal in the STM frame is known so that any STM frame signal can be either added to or extracted from the STM frame.

In addition to the CCITT Recommendations mentioned above, the SDH system is described e.g. in the "Transmission Networking: SONET and the Synchronous Digital Hierarchy" by Mike Sexton and Andy Reid, Artech House, London 1992.

A digital cross-connect (DXC, DCC) is an essential component in the traffic control of a communications network. In an SDH digital cross-connect, a desired payload can be extracted from the incoming STM frame and directed to the time slots of the outgoing STM frame. Digital cross-connects are used e.g. in traffic concentration, network protection, fast re-routing in fault situations and network re-configuration according to need.

The structure of a digital cross-connect can be schematically illustrated as in Fig. 2. Operation of a digital cross-connect can be controlled by an administrative unit 300 which may be used to give commands to direct a signal in the incoming STM frame to a certain channel of the outgoing STM frame. A control unit 200 of the digital cross-connect 1 controls the switching equipment 100 that performs the actual switching of the signals in the digital cross-connect. Among other things, the control unit routes the signals through individual switches in the switching equipment 100 and drives the switching equipment 100 to make the connections according to the routes chosen. The thick line 310 in Fig. 2 represents a broadband communication link 310 wherein transmitted signals are controlled by the digital cross-connect 1 illustrated in Fig. 2.

Various physical constructions of digital cross-connects are described in greater detail e.g. in the book by Sexton and Reid mentioned above. This patent application focuses on the operation of the control and administrative units 200, 300 of digital cross-connects.

The model for the administrative environment of digital cross-connects, so-called information model, is described e.g. in the CCITT Recommendation G.774. The recommendation in question defines certain objects and object classes which correspond to certain physical and logical parts and functions of digital cross-connects and other network elements. Administrative units 300 control digital cross-connects and other SDH network elements by means of this model, which consists of objects, so that commands issued by the administrative unit are directed to various objects representing signals and interfaces.

In the information model of digital cross-connects, termination point (TP) objects represent the interfaces of signals to be connected. Each TP object represents one signal to be connected and is part of not more than one cross-connection. A TP object may also be unconnected. So, there is at least one object representing each two-signal cross-connection.

When creating low-speed cross-connections, there will be a great amount of objects representing cross-connections. For example, when transmitting ordinary voice traffic on the STM-1 level, the STM-1 frame payload comprises usually sixty-three 2-Mbit/s channels, whose payloads typically comprise thirty-one 64-kbit/s channels, or thirty if common channel signalling is used.. Therefore, in an STM-1 frame may comprise 1953 channels to be connected. In addition, protected cross-connections require three objects per cross-connection: the incoming and outgoing channel TP object and an object representing the cross-connection. Each of these three objects contains information about which channels are interconnected. High number of objects consumes considerably memory resources, and their creation is slow.

At the moment, standards define the cross-connection of 64-kbit/s channels. In the future, cross-connections of 32-kbit/s, 16-kbit/s and 8-kbit/s channels will also be needed. The cross-connection of these channels will require even more resources.

The slowness of the solution according to the prior art is particularly problematic when a great number of connections in a digital cross-connect are changed at once. An example of such a situation is provided by the special night connections of the digital cross-connect in the PBX of a big organisation. In such a case, the connections have to be changed into night connections every evening and returned into day connections every morning. In such a case, the slowness of the changing of the connections often hampers the communications.

The solution according to the prior art also has disadvantages related to the handling of empty, or unconnected, channels. Unused time slots usually contain a certain kind of padding data. In some applications the unused time slots are filled with ones, in some other applications, when using channel specific signalling, the c signalling bit is zero and all other bits are ones. According to the prior art, a cross connection has to be defined that specifies the constant padding data to be transmitted. Such a solution uses resources unnecessarily because, this way, a cross connection has to be defined even for unused time slots and objects representing that cross connection have to be created. This solution also makes the creation of new connections more complicated: first, the padding data cross connection, i.e. the objects representing it, has to be removed, and only then can a new cross connection be added.

A patent publication JP8130523 A discloses a pass route switching system for an SDH transmission network. According to the patent abstract, the apparatus is meant for autonomously executing switching from a current route to a stand-by route between cross connection devices at the occurrence of a pass fault. A local control part in a cross connection device detecting a pass fault retrieves a pass monitoring part managing a part that is indicating pass ID in a device that is detecting the fault out of plural managing parts, determines a stand-by route and branches a transmitting side to the stand-by route. In the other cross connection device, a pass trace ID comparing part for the stand-by route detects coincidence between received pass trace ID and pass trace ID to be switched and informs the detected result to a cross connection part and a remote control part recognizes the start of route switching in the equipment and switches/branches the receiving side/transmitting side to the stand-by route. In the device also, a stand-by route pass trace ID comparing part detects coincidence between the received pass trace ID and the pass trace ID to be switched and a local control, a part switches the receiving side to the stand-by route and releases the branch of the transmitting side.

The definition of cross connections requires a great number of control commands, especially if there are a lot of cross connections to be changed or created. Handling a great number of commands is slow. After every control command the digital cross-connect has to perform certain operations, such as verify the command, create the connection in the switching equipment as required by the command and copy the connection data to a storage medium. The data have to be copied and stored in case of electric black-outs and other malfunctions and also because any circuit board of the digital cross-connect must be replaceable in the middle of operation, if necessary, so that the data describing the current connections can be fetched to the new card from the saved back-up files. An ordinary SDH network element can handle about 2 messages per second including all the necessary operations such as the back-up copying mentioned above. It is possible to pack the data of more than one cross connection in one connection-making command, or so-called M-ACTION command, sent by the administrative unit to the SDH network element, but not, however, a very large quantity, a few dozens at the most. In situations where even hundreds of cross connections must be changed at a time, a great number of individual connection-making commands has to be transmitted. This also slows down the creation of cross connections and makes it more cumbersome. For example, using the manner described by the standard, 1000 cross connections can be packed into about 30 to 100 messages. The handling of so many messages takes a lot of time and causes a lot of unnecessary repetition of certain operations. The coding of the commands, so-called ASN.1 coding, is described in more detail in the CCITT Recommendation X.208.

An object of the invention is to provide a management arrangement for a digital cross-connect requiring less resources than prior-art arrangements. Another object of the invention is to provide a management arrangement for a digital cross-connect enabling large connection changes to be made faster than in the prior art. A further object of the invention is to provide a management arrangement for a digital cross-connect enabling the padding data sent in unused time slots to be defined in a way that requires less resources than prior-art arrangements.

The objects are achieved by concentrating the cross connection data, which in prior-art solutions are spread out in several objects, in one object and by concentrating the information about the lowest-level signals in TP objects representing higher-level signals.

The SDH network element according to the invention is characterised in that what is said in the characterizing part of the independent claim directed to an SDH network element.

The invention is also directed to a method which is characterised in that what is said in the characterizing part of the independent claim directed to a method.

In the arrangement according to the invention, the cross connection data are concentrated in one element, namely, a special cross connection object. TP objects are not formed one per each lowest-level channel but one per each certain higher-level channel, e.g. 2-Mbit/s channel in typical voice traffic. Data related to the lowest-level channels, such as 64-kbit/s channels, are presented in a centralised manner in the TP object of each 2-Mbit/s channel e.g. in the form of a table or in some other such way. In the arrangement according to the invention, objects are not created nor removed when cross connections are created, changed or removed but only the parameters of said cross connection object and TP objects are changed. Such an arrangement facilitates the transfer of data related to a large group of cross connections from the administrative unit to the SDH network element in one message and the transfer of a great amount of connection changes at a time from the cross connection object to the switching equipment of the SDH network element.

The invention is described in more detail with reference to the preferred embodiments presented by way of example, and to the accompanying drawings in which
- Fig. 1: shows the structure of an STM-N-level frame,
- Fig. 2: shows the block diagram of an ordinary digital cross-connect according to the prior art and the administrative unit of the digital cross-connect,
- Fig. 3: shows the structure of the control unit of the SDH network element according to the invention, and
- Fig. 4: shows an exemplary embodiment of the communication method facilitated by the arrangement according to the invention.

Like elements in the drawings are denoted by like reference designators.

In the arrangement according to the invention, the cross connection data are centralised in one cross connection management element, i.e. the cross connection object. In the arrangement according to the invention, the TP objects and the cross connection object are advantageously created only once, preferably when the digital cross-connect is taken into use or started. The data of the cross connection object and TP objects are changed when connections are created or changed. Unlike in prior-art solutions, there is not one channel management element, or TP object, per each lowest-level signal to be connected but one per each higher-level signal, said higher-level signals comprising several lowest-level signals. Each TP object has a table that contains information related to the lowest-level signals. Preferably, the table of a TP object contains information about the status of each lowest-level signal: e.g., the channel may be in use or free or it cannot be connected. Advantageously, the TP objects contain no information on the cross connections.

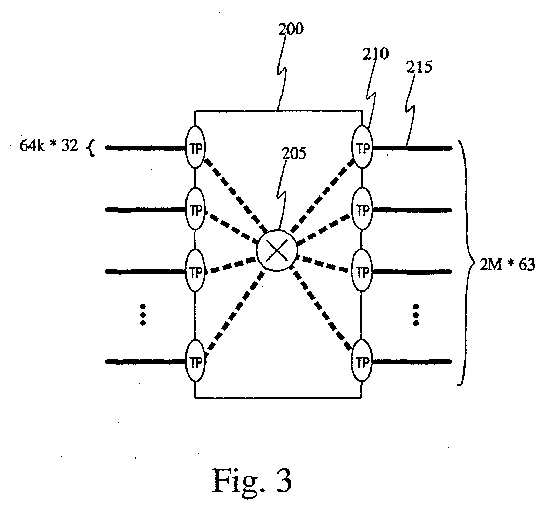

Fig. 3 illustrates the information model of the control unit 200 of a digital cross-connect for the system according to the invention. The information model in Fig. 3 represents a so-called 4/0 digital cross-connect in which the incoming signal is an STM-1-level signal but the signals to be connected are 64-kbit/s signals. In the example of Fig. 3 there is one TP object 210 per each 2-Mbit/s signal 215, said TP object including a table which contains the data for the 64-kbit/s signals of the 2-Mbit/s signal in question. Thus it is possible to refer to individual 64-kbit/s channels by means of the TP object and the index of the table included in the object. The cross connection data are concentrated in the cross connection object 205. In such an arrangement, the cross connection object 205 and TP objects need not be created or removed when making and removing cross connections but only the data in them are modified.

In the arrangement according to the invention, the protection of connections can also be carried out in a centralised manner. In such an embodiment, the data related to the protection of connections are concentrated in a certain connection protection object.

The solution according to the invention also facilitates simple realisation of repeated large connection changes. In a preferred embodiment of the invention the cross connection object 205 can store in the control unit's memory more than one set of cross connection data containing the data for all cross connections. In such an embodiment the changing of cross connections can be implemented e.g. by means of a command from the administrative unit 300. Then, unlike in the prior art, there is no need to feed the new cross connection data from the administrative unit to the digital cross-connect but the cross connection object fetches from the control unit's memory the desired set of cross connection data stored there and modifies the connections in the switching equipment 100 on the basis of the information fetched.

It is obvious to a person skilled in the art that the storing of several sets of cross connection data can be performed in many ways. For example, the cross connection object may have a data structure in which the desired sets can be stored. The cross connection data sets can also be stored by means of a separate function so that the cross connection object fetches the desired set from another element, such as a special set storing object.

The arrangement according to the invention also facilitates a simple realisation of the control of padding data transmitted on unused channels. For example, the cross connection object may have in its memory a certain bit pattern transmitted by the digital cross-connect to all unconnected channels. Thus the padding data transmitted by the digital cross-connect can be changed by issuing a command from the administrative unit 300 which changes said bit pattern of padding data.

The arrangement described above also facilitates the use of a more efficient communication method between the administrative unit and the SDH network element. As the cross connection data are only in one object, a great amount of cross connection data can be transmitted using one command conveying to the object in question in the form of a parameter one table which contains the desired cross connection data. Such a table containing the cross connection data can be effectively presented according to ASN.1 coding as a byte string, for example, so that the share of extra information resulting from the ASN.1 coding remains small in the transfer.

Fewer commands means faster creation of connections. The cross connection object 205 can transmit to the switching equipment 100 at once a bit switching matrix, so that all these cross connection changes are realised essentially at the same time. In the prior art, simultaneous changing of cross connections is possible only in the case of a very small number of cross connections to be changed.

The upper limit as defined by the standards for a single so-called M-ACTION message sent by the administrative unit to the SDH network element is about 10 kbytes. This puts a limit on the amount of connection data that can be transferred in one message from the administrative unit to the SDH network element. In some cases, e.g. when changing all cross connections in a digital cross-connect, all data to be transferred do not fit in a message of that size. According to the ASN.1 standard, however, a message bigger than 10 kbytes can be divided into parts and the message can be then sent in parts. In such a case, in order to avoid errors, the SDH network element receiving the message has to wait for all parts of the message to arrive before processing the message. This may cause an error if more than one administrative units 300 attempt simultaneously to send messages to the network element in question so that the network element may consecutively receive parts of messages that belong to different messages. However, the arrangement according to the prior art does not take such an error possibility caused by multiple administrative units into account, and the network element receiving the messages does not know which received message parts belong to one and the same message.

The method according to the invention takes advantage of the fact that in order to convey the message the administrative unit establishes a connection with the SDH network element and the SDH network element has an internal code for each connection. Connections with different administrative units are separate from each other so that the corresponding internal connection codes of the SDH network element are also different from each other. Typically, such a connection is released after the message has been transmitted so that said internal code is freed for later use.

In the communication method according to the invention, the SDH network element receiving messages stores a received message part and adds to it a code corresponding to the connection code. When the next message part arrives, the network element control unit is able to compare the code of that message part with the code of the message stored earlier and decide whether the received parts belong to the same message. The communication method according to the invention can also be used to convey large data sets other than cross connection data as described here.

In a preferred embodiment of the invention, the procedure in a conflict situation is e.g. as follows. If the control unit detects that the code of the latest arrived message part differs from the code of the message part received and stored earlier and the latest arrived message part is the first part of the message in question, the control unit deletes said message part received earlier and stores said latest received message part in its memory. If the codes differ from each other and the latest message part is not the first part of the message in question, the control unit returns to the administrative unit in question a negative acknowledge so that the administrative unit in question is informed that the data transfer was unsuccessful. As the control unit receives a message part that belongs together with a message part already stored in memory and is the last part of the message in question, the control unit advantageously verifies the message and carries out the commands in the message. In such an embodiment, the conflict is won by the administrative unit that starts message transmission after the others.

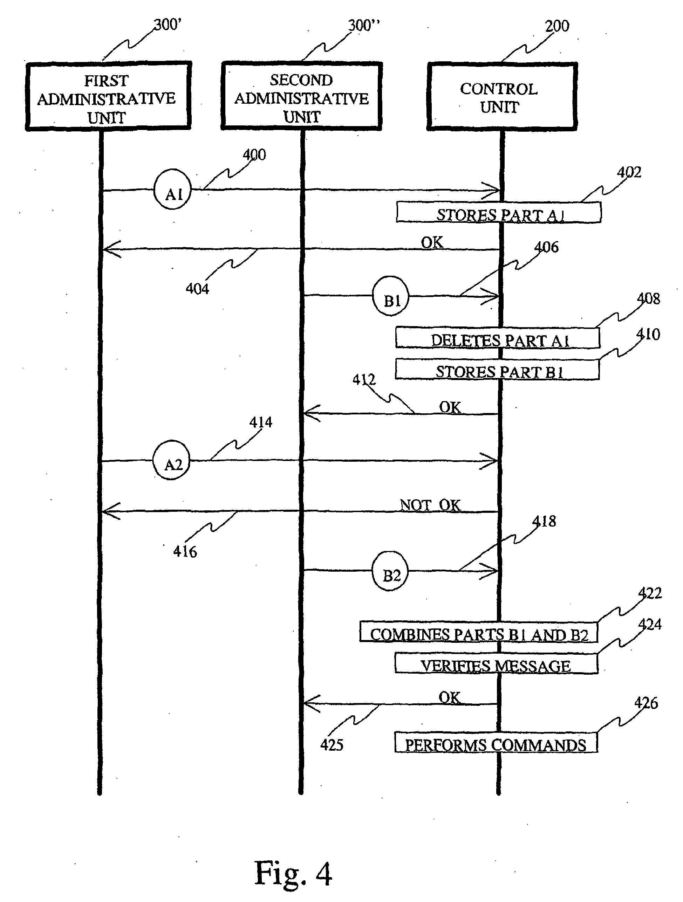

Fig. 4 schematically shows part of the signalling according to such an embodiment of the invention between two administrative units 300', 300" and the SDH network element control unit 200. In step 400, a first administrative unit 300' sends a first part A1 of a message A. The control unit stores 402 the received part and sends 404 a positive acknowledge OK. At this stage, a second administrative unit 300" sends 406 a first part B1 of its message B. The control unit 200 detects that the message part B1 is the first part of a new message and belongs to a different message than the stored message part A1, so the control unit deletes 408 from its memory the stored message part A1 and stores 410 the new part B1. Then the control unit returns 412 to the second administrative unit 300" a positive acknowledge OK. As the first administrative unit 300' then sends 414 a second part A2 of its message, the control unit detects that the message part is a continuation part of a message and that the message part belongs to a different message than the stored part B1, so the control unit rejects the part A2 and returns 416 to the first administrative unit 300' a negative acknowledge NOT_OK. Next, the second administrative unit 300" sends 418 a second part B2 of its message. The control unit detects that it belongs together with the stored message part B1 and combines 422 said parts B1 and B2. Finally, the control unit verifies 424 that the resulting message is correct, returns 425 to the second control unit a positive acknowledge OK and carries out 426 the commands in the message.

In another preferred embodiment of the invention, the control unit stores all received parts of messages and combines the parts belonging to one and the same message on the basis of the connection code. When the control unit detects that a given received message part is the last part of the message in question it carries out the commands in the message. In such an embodiment, the control unit carries out the messages in the order in which their last parts arrive. In this embodiment, the control unit preferably removes such data set parts, whose adjoining parts have not been received within a certain predetermined time period to avoid persistence of obsolete data set parts as a result of eventual malfunctions. Such an embodiment, however, has the disadvantage that it requires more memory than the embodiment described above.

The arrangement according to the invention requires less resources than prior-art solutions: there is no need to create one or more objects for each cross connection, nor to remove them when the cross connection is removed. This considerably saves computing capacity of the SDH network element control unit. Memory space is also saved considerably. The arrangement according to the invention makes the creation of cross connections considerably faster particularly in situations in which cross connections are changed or created large numbers at a time. The arrangement according to the invention facilitates large, repeated cross connection changes. The arrangement according to the invention also facilitates the simultaneous realisation of even hundreds of cross connection changes. Transfer of a large cross connection data set in one command saves computing capacity and speeds up the creation of connections also through the reduced need to back up cross connection data.

The examples above describe the connection of STM-1-level signals. The invention is not confined solely to the STM-1 level but the arrangement according to the invention can also be applied to the connection of other STM-N signals. The invention can also be applied to the connection of lowest-level signals other than the 64-kbit/s signals, such as the 32-kbit/s, 16-kbit/s or 8-kbit/s signals. The lowest-level signals can also be grouped into signals other than 2-Mbit/s signals, so that in the arrangement according to the invention the TP objects may also represent other than 2-Mbit/s signals.

An SDH network element realised with the arrangement according to the invention may comprise other functional blocks in addition to the digital cross-connect.

Above the invention was described referring to its preferred embodiments but it is obvious that the invention can be modified in many ways in accordance with the inventional idea defined by the claims set forth below.

## Claims

1. An SDH network element (1) comprising a control unit (200) and switching equipment (100) to make cross connections, wherein
said control unit (200) comprises one cross connection management element (205), **characterised in that** said control unit comprises one channel management element (210) per each input channel (215) of the SDH network element (1) consisting of several lowest-level channels,
so that said cross connection management element (205) is arranged so as to save the current cross connection data,
and so that each of said channel management elements (210) is arranged so as to save the information about the status of each lowest-level channel of the input channel of the SDH network element (1) that corresponds to the management element in question.

2. The SDH network element (1) of claim 1, **characterised in that** said cross connection management element (210) is arranged so as to store, in response to a certain first command, a set of data about current cross connections, and **in that**
said cross connection management element (210) is arranged so as to restore, in response to a certain second command, a stored set of data about cross connections into a set of data about current cross connections, and to make the cross connections in the switching equipment (100) such that they correspond to the restored set of data about cross connections.

3. The SDH network element (1) of claim 2, **characterised in that** said cross connection management element (210) is arranged so as to store more than one set of data about cross connections,
and to restore a certain stored set of data about cross connections into a set of data about current cross connections in response to a certain command indicating the set to be restored.

4. The SDH network element (1) of claim 1, **characterised in that** it is arranged to cross connect channels of an STM-1 level signal, said input channels (215) of the SDH network element (1) consisting of several lowest-level channels being 2048 kbit/s channels.

5. The SDH network element (1) of claim 1, **characterised in that** it is arranged to cross connect channels of an STM-N level signal.

6. A method for transferring a set of data from an SDH network element's administrative unit (300) to the SDH network element (1), **characterised in that** it comprises stages wherein
- the administrative unit (300) of the SDH network element (1) sends (400) a first part (A1) of a data set to be transmitted to the SDH network element (1),
- the SDH network element (1) adds to the received data set part the code of the transmission link in question,
- the SDH network element (1) compares the received data set part and said code with a data set part possibly stored earlier, so that
- if no data set part was stored earlier, the SDH network element (1) stores the received part and the code attached to it,
- if a data set part was stored earlier, the SDH network element (1) compares the codes of the stored and received parts, and if the codes match, the SDH network element (1) combines the received part (B2) with said stored part (B1),
- the SDH network element (1) checks whether the stored part and parts possibly attached to it constitute a whole data set, so that if said stored part and parts possibly attached to it constitute a whole data set, the SDH network element (1) processes said data set.

7. The method of claim 6, **characterised in that**
the stage of comparison of the stored part (A1) and the received part (B1) also comprises a stage in which the data set part stored earlier (A1) is deleted (408) and the received part (B1) is stored if said codes do not match.

8. The method of claim 6, **characterised in that** the SDH network element (1) stores all received data set parts, and that the SDH network element (1) processes the data sets in the order, in which the data sets form whole data sets as a result of receiving data set parts.

## Patentansprüche

1. SDH-Netzwerkelement (1), welches eine Steuerungseinheit (200) und eine Schalteinrichtung (100) umfasst, um Querverbindungen herzustellen, wobei
die Steuerungseinheit (200) ein Querverbindungs-Verwaltungselement (205) umfasst, **dadurch gekennzeichnet, dass** die Steuerungseinheit ein Kanalverwaltungselement (210) je Eingabekanal (215) des SDH-Netzwerkelements (1) umfasst, welcher aus verschiedenen Kleinstsignalkanälen besteht,
derart, dass das Querverbindungs-Verwaltungselement (205) so eingerichtet ist, dass es die laufenden Querverbindungsdaten speichert,
und derart, dass jedes der Kanalverwaltungselemente (210) so eingerichtet ist, dass es Daten über den Status jedes Kleinstsignalkanals des Eingabekanals des SDH-Netzwerkelements (1) speichert, der dem in Frage stehenden Verwaltungselement entspricht.

2. SDH-Netzwerkelement (1) nach Anspruch 1, **dadurch gekennzeichnet, dass** das Querverbindungs-Verwaltungselement (210) so eingerichtet ist, dass es in Reaktion auf einen bestimmten ersten Befehl einen Datensatz über laufende Querverbindungen speichert, und dass das Querverbindungs-Verwaltungselement (210) so eingerichtet ist, dass es in Reaktion auf einen bestimmten zweiten Befehl einen gespeicherten Datensatz über Querverbindungen in einen Datensatz über laufende Querverbindungen umspeichert, und dass es die Querverbindungen in der Schalteinrichtung (100) derart gestaltet, dass sie dem umgespeicherten Datensatz über Querverbindungen entsprechen.

3. SDH-Netzwerkelement (1) nach Anspruch 2, **dadurch gekennzeichnet, dass** das Querverbindungs-Verwaltungselement (210) so eingerichtet ist, dass es mehr als einen Datensatz über Querverbindungen speichert,
und dass es in Reaktion auf einen bestimmten Befehl, der anzeigt, dass der Datensatz umgespeichert werden soll, einen bestimmten gespeicherten Datensatz über Querverbindungen in einen Datensatz über laufende Querverbindungen umspeichert.

4. SDH-Netzwerkelement (1) nach Anspruch 1, **dadurch gekennzeichnet, dass** es so eingerichtet ist, dass es Kanäle eines STM-1-Signals querverbindet, wobei die Eingabekanäle (215) des SDH-Netzwerkelements (1) aus verschiedenen Kleinstsignalkanälen bestehen, welche 2048kbit/s-Kanäle sind.

5. SDH-Netzwerkelement (1) nach Anspruch 1, **dadurch gekennzeichnet, dass** es so eingerichtet ist, dass es Kanäle eines STM-N-Signals querverbindet.

6. Verfahren zum Übertragen eines Datensatzes von der Verwaltungseinheit (300) eines SDH-Netzwerkelements zu dem SDH-Netzwerkelement (1), **dadurch gekennzeichnet, dass** es Schritte umfasst, wobei
- die Verwaltungseinheit (300) des SDH-Netzwerkelements (1) einen ersten Teil (A1) eines Datensatzes sendet (400), der an das SDH-Netzwerkelement (1) übermittelt werden soll,
- das SDH-Netzwerkelement (1) dem empfangenen Teildatensatz den Code der in Frage stehenden Übermittlungsverbindung hinzufügt,
- das SDH-Netzwerkelement (1) den empfangenen Teildatensatz und den Code mit einem möglicherweise früher gespeicherten Teildatensatz vergleicht, so dass
- dann, wenn früher kein Teildatensatz gespeichert worden ist, das SDH-Netzwerkelement (1) den empfangenen Teil und den damit verbundenen Code speichert,
- dann, wenn früher ein Teildatensatz gespeichert worden ist, das SDH-Netzwerkelement (1) die Codes des gespeicherten und des empfangenen Teils vergleicht, und, wenn die Codes übereinstimmen, das SDH-Netzwerkelement (1) den empfangenen Teil (B2) mit dem gespeicherten Teil (B1) kombiniert,
- das SDH-Netzwerkelement (1) überprüft, ob der gespeicherte Teil und Teile, die möglicherweise mit ihm verbunden sind, einen vollständigen Datensatz begründen, derart, dass dann, wenn der gespeicherte Teil und Teile, die möglicherweise mit ihm verbunden sind, einen vollständigen Datensatz begründen, das SDH-Netzwerkelement (1) diesen Datensatz verarbeitet.

7. Verfahren nach Anspruch 6, **dadurch gekennzeichnet, dass**
der Schritt des Vergleichs des gespeicherten Teils (A1) und des empfangenen Teils (B1) auch einen Schritt umfasst, in welchem der früher gespeicherte Teildatensatz (A1) gelöscht wird (408) und der empfangene Teil (B1) gespeichert wird, wenn die Codes nicht übereinstimmen.

8. Verfahren nach Anspruch 6, **dadurch gekennzeichnet, dass** das SDH-Netzwerkelement (1) alle empfangenen Teildatensätze speichert, und dass das SDH-Netzwerkelement (1) die Datensätze in der Reihenfolge verarbeitet, in welcher die Datensätze als ein Ergebnis des Empfangs von Teildatensätzen vollständige Datensätze bilden.

## Revendications

1. Elément de réseau SDH (1) comprenant une unité de commande (200) et un équipement de commutation (100) destinés à effectuer des interconnexions, dans lequel
ladite unité de commande (200) comprend un élément de gestion d'interconnexion (205), **caractérisé en ce que** ladite unité de commande comprend un élément de gestion de canal (210) pour chaque canal d'entrée (215) de l'élément de réseau SDH (1) composé de plusieurs canaux de niveau inférieur,
de telle sorte que ledit élément de gestion d'interconnexion (205) soit agencé de façon à sauvegarder les données en cours relatives à l'interconnexion,
et de telle sorte que chacun desdits éléments de gestion de canal (210) soit agencé de façon à sauvegarder les informations relatives au statut de chaque canal de niveau inférieur du canal d'entrée de l'élément de réseau SDH (1) qui correspond à l'élément de gestion en question.

2. Elément de réseau SDH (1) selon la revendication 1, **caractérisé en ce que** ledit élément de gestion d'interconnexion (210) est agencé de façon à stocker, en réponse à une certaine première commande, un ensemble de données relatives aux interconnexions en cours, et **en ce que** ledit élément de gestion d'interconnexion (210) est agencé de façon à restaurer, en réponse à une certaine seconde commande, un ensemble stocké de données relatives aux interconnexions en un ensemble de données relatives aux interconnexions en cours, et à effectuer les interconnexions dans l'équipement de commutation (100) de telle sorte qu'elles correspondent à l'ensemble restauré de données relatives aux interconnexions.

3. Elément de réseau SDH (1) selon la revendication 2, **caractérisé en ce que** ledit élément de gestion d'interconnexion (210) est agencé de façon à stocker plus d'un ensemble de données relatives aux interconnexions,
et à restaurer un certain ensemble stocké de données relatives aux interconnexions en un ensemble de données relatives aux interconnexions en cours en réponse à une certaine commande indiquant l'ensemble devant être restauré.

4. Elément de réseau SDH (1) selon la revendication 1, **caractérisé en ce qu'**il est agencé pour interconnecter les canaux d'un signal de niveau STM-1, lesdits canaux d'entrée (215) de l'élément de réseau SDH (1) composé de plusieurs canaux de niveau inférieur étant des canaux de 2048 kbit/seconde.

5. Elément de réseau SDH (1) selon la revendication 1, **caractérisé en ce qu'**il est agencé pour interconnecter les canaux d'un signal de niveau STM-N.

6. Procédé de transfert d'un ensemble de données entre l'unité administrative (300) d'un élément de réseau SDH et l'élément de réseau SDH (1), **caractérisé en ce qu'**il comprend des étapes au cours desquelles
- l'unité administrative (300) de l'élément de réseau SDH (1) envoie (400) une première partie (A1) d'un ensemble de données à transmettre à l'élément de réseau SDH (1),
- l'élément de réseau SDH (1) ajoute, à la partie de l'ensemble de données reçue, le code de la liaison de transmission en question,
- l'élément de réseau SDH (1) compare la partie de l'ensemble de données reçue et ledit code avec une partie d'ensemble de données éventuellement stockée au préalable, de telle sorte que
- si aucune partie d'ensemble de données n'a été stockée au préalable, l'élément de réseau SDH (1) stocke la partie reçue et le code joint à celle-ci,
- si une partie d'ensemble de données a été stockée au préalable, l'élément de réseau SDH (1) compare les codes des parties stockée et reçue, et, si le code correspond, l'élément de réseau SDH (1) combine la partie reçue (B2) avec ladite partie stockée (B1),
- l'élément de réseau SDH (1) vérifie si la partie stockée et les parties éventuellement jointes à celle-ci constituent un ensemble de données complet, de telle sorte que, si ladite partie stockée et lesdites parties éventuellement jointes à celle-ci constituent un ensemble de données complet, l'élément de réseau SDH (1) traite ledit ensemble de données.

7. Procédé selon la revendication 6, **caractérisé en ce que**
l'étape de comparaison de la partie stockée (A1) et de la partie reçue (B1) comprend également une étape au cours de laquelle la partie d'ensemble de données stockée au préalable (A1) est supprimée (408) et la partie reçue (B1) est stockée si lesdits codes ne correspondent pas.

8. Procédé selon la revendication 6, **caractérisé en ce que** l'élément de réseau SDH (1) stocke toutes les parties d'ensembles de données reçues, et **en ce que** l'élément de réseau SDH (1) traite les ensembles de données dans l'ordre, dans lequel les ensembles de données forment les ensembles de données complets à la suite de la réception des parties d'ensembles de données.
